# FASCICULE DE BREVET EUROPEEN

(11) **EP 3 477 273 B1**
(45) Date de publication et mention de la délivrance du brevet: **10.06.2020**
(21) Numéro de dépôt: 18196370.3
(22) Date de dépôt: 24.09.2018
(51) Int. Cl.: G01M 3/20, G01D 7/00

(54) **MODULE DE DÉTECTION DE FUITES ET PROCÉDÉ DE CONTRÔLE DE L'ÉTANCHÉITÉ D'UN OBJET À TESTER PAR GAZ TRACEUR**
MODUL ZUR ERKENNUNG VON LECKS, UND KONTROLLVERFAHREN DER DICHTHEIT EINES MIT SPÜRGAS ZU ÜBERPRÜFENDEN GEGENSTANDS
LEAK DETECTION MODULE AND METHOD FOR TESTING THE AIRTIGHTNESS OF AN OBJECT TO BE TESTED USING A TRACER GAS

(30) Priorité: 27.10.2017 FR 1760170
(43) Date de publication de la demande: 01.05.2019
(73) Titulaire: Pfeiffer Vacuum, 74000 Annecy (FR)
(72) Inventeur: HADJ-RABAH, Smail, 74000 ANNECY (FR); JACQUOT, Ghislain, 74150 MOYE (FR); SCHREINER, Mathieu, 74210 Doussard (FR); DUCIMETIERE, Laurent, 74320 SEVRIER (FR); NOMINE, Cyrille, 74330 EPAGNY (FR); JOURDAN, Pascal, 74330 POISY (FR)
(74) Mandataire: Croonenbroek, Thomas Jakob

(56) Documents cités:
- EP-A1- 2 169 444
- WO-A1-2014/032353
- US-B1- 7 657 384

## Description

La présente invention concerne un module de détection de fuites pour le contrôle de l'étanchéité d'un objet à tester par gaz traceur et un procédé de contrôle de l'étanchéité d'un objet à tester par gaz traceur.

On connait le test dit « de reniflage » et le test dit « par aspersion » de gaz traceur pour contrôler l'étanchéité d'un objet. Ces méthodes font appel à la détection du passage du gaz traceur à travers les éventuelles fuites de l'objet à tester. En mode reniflage, on recherche à l'aide d'un détecteur de fuites relié à une sonde de reniflage, la présence éventuelle du gaz traceur autour d'un objet à tester rempli avec du gaz traceur généralement pressurisé. En mode d'aspersion, on asperge avec un pistolet d'aspersion l'objet à tester de gaz traceur, le volume intérieur de l'objet à tester étant relié à un détecteur de fuites.

La recherche de fuites est réalisée en déplaçant la sonde de reniflage ou le pistolet d'aspersion autour de l'objet à tester, notamment au niveau des zones de test susceptibles de présenter des faiblesses d'étanchéité, tel qu'autour des joints d'étanchéité. Une augmentation du signal de concentration en gaz traceur mesuré est révélatrice de la présence d'une fuite à l'endroit où est positionné l'embout de la sonde. L'opérateur doit donc surveiller à la fois la sonde et l'écran du détecteur. Cette étape n'est pas aisée car l'écran est généralement disposé à l'écart de la zone de recherche, ce qui oblige l'opérateur à tourner souvent la tête entre le détecteur et la sonde.

Cela peut nuire à la qualité de détection du fait de la nature très réactive du gaz traceur. L'opérateur peut en effet risquer de manquer une détection de fuite le temps qu'il détourne les yeux de l'écran. Une solution consiste à afficher une évolution temporelle du signal mesuré. En visualisant l'historique des mesures, l'opérateur peut rapidement vérifier si une fuite est apparue ou non alors qu'il ne regardait pas l'écran. Un inconvénient est que l'opérateur n'est pas informé en temps réel de la présence d'une fuite et doit reprendre sa recherche pour localiser la fuite manquée.

Par ailleurs, tourner la tête de façon répétée peut rendre le contrôle d'étanchéité inconfortable pour l'opérateur, notamment en production.

En outre, lorsque le détecteur de fuites est relativement éloigné de la zone de recherche et que l'opérateur utilise un écran déporté, la manipulation de celui-ci nécessite l'immobilisation d'une main de l'opérateur, ce qui peut s'avérer inconfortable et incommode.

Une autre solution consiste à émettre un son dont l'une au moins des caractéristiques comme l'amplitude, la tonalité ou le motif, évolue avec la concentration en gaz traceur mesuré. Cette solution permet à l'opérateur de savoir lorsque la sonde s'approche d'une fuite sans avoir à regarder l'écran du détecteur. Une partie de l'information peut cependant être perdue car la discrimination des variations sonores par l'opérateur est moins précise que la lecture de valeurs numériques.

Certaines sondes comportent des voyants changeant de couleur avec le niveau de concentration en gaz traceur. Cependant, comme pour le son, le changement de couleur peut engendrer une perte d'information.

D'autres sondes sont munies d'écrans dédiés, reliés aux détecteurs, affichant la mesure de la concentration en gaz traceur. Cependant, la lecture sur l'écran de la sonde peut ne pas toujours être possible car la lisibilité dépend de l'orientation de la sonde et celle-ci dépend de l'accessibilité de la zone de test. Ainsi le document US7657384 divulgue un module de détection de fuites pour le contrôle de l'étanchéité d'un objet à tester par gaz traceur comportant un détecteur de fuites et une sonde manipulable par l'utilisateur comportant en outre un dispositif de vision comprenant une unité de traitement et d'affichage configurée pour communiquer avec le détecteur de fuites.

Un des buts de la présente invention est donc de proposer un module de détection de fuites qui résout au moins en partie les inconvénients précités, notamment en étant plus ergonomique et plus facile à manipuler.

A cet effet, l'invention a pour objet un module de détection de fuites pour le contrôle de l'étanchéité d'un objet à tester par gaz traceur selon la revendication 1.

La concentration en gaz traceur est donc affichée dans le champ de vision de l'utilisateur peu importe où il regarde. L'information affichée suit ainsi le regard de l'utilisateur même si celui-ci détourne la tête de l'écran du détecteur.

Selon une ou plusieurs caractéristiques du module de détection de fuites, prise seule ou en combinaison :
- le dispositif de vision comporte au moins une caméra frontale configurée pour prendre des images dans le champ de vision de l'utilisateur,
- la surface de visualisation comporte un écran configuré pour afficher des images dans une portion du champ de vision de l'utilisateur,
- la surface de visualisation est formée par une surface transparente permettant à l'utilisateur de voir à travers, l'unité de traitement et d'affichage étant configurée pour afficher en réalité augmentée sur la surface de visualisation au moins une information relative à la détection de fuites,
- l'unité de traitement et d'affichage comporte un moyen de reconnaissance configuré pour reconnaitre une zone de test de l'objet à tester et pour afficher sur la surface de visualisation, un repère visuel de la au moins une zone de test,
- le moyen de reconnaissance est configuré pour reconnaitre un embout de la sonde dans la surface de visualisation et pour détecter lorsque l'embout de la sonde est situé dans une zone de test de l'objet à tester,
- la sonde est une sonde de reniflage reliée au détecteur de fuites,
- la sonde est une soufflette d'aspersion destinée à être reliée à une source de gaz traceur.

L'invention a aussi pour objet un procédé de contrôle de l'étanchéité d'un objet à tester par gaz traceur caractérisé en ce qu'un dispositif de vision d'un module de détection de fuites tel que décrit précédemment, affiche une information relative à la détection de fuites comprenant au moins un signal représentatif de la concentration en gaz traceur mesurée par le détecteur de fuites sur une surface de visualisation placée dans le champ de vision de l'utilisateur par un dispositif de vision porté sur la tête d'un utilisateur.

Le signal peut être affiché sous la forme d'une valeur numérique, de bargraphes ou de graphique.

L'information affichée peut indiquer si le signal dépasse un seuil de concentration en gaz traceur maximal.

L'information affichée peut comporter un signal représentatif d'un état de fonctionnement du détecteur de fuites, tel qu'un état d'alerte ou de mesure en cours, un défaut, une maintenance à réaliser ou une recommandation d'utilisation.

Au moins une zone de test prédéterminée de l'objet à tester peut être reconnue par un moyen de reconnaissance de l'unité de traitement qui indique la zone de test en affichant en réalité augmentée, un repère visuel sur la surface de visualisation. Le repère peut être accompagné de l'affichage d'au moins un seuil de concentration en gaz traceur maximal associé à la zone de test prédéterminée de l'objet à tester.

Le moyen de reconnaissance de l'unité de traitement peut détecter lorsque l'embout de la sonde est situé dans une zone de test de l'objet à tester.

On peut indiquer les zones de test qui ont été testées par la sonde.

On peut enregistrer les valeurs de concentration en gaz traceur mesurées associées aux zones de test. La séquence d'opérations de mesure réalisée par l'utilisateur sur l'objet à tester peut être filmée. On peut prendre une ou plusieurs photos de la sonde positionnée dans des zones de test de l'objet à tester.

D'autres caractéristiques et avantages de l'invention ressortiront de la description suivante, donnée à titre d'exemple, sans caractère limitatif, en regard des dessins annexés sur lesquels:
Figure 1 montre une vue schématique d'un utilisateur coiffé d'un dispositif de vision et manipulant une sonde de reniflage reliée à un détecteur de fuites.
Figure 2 montre une vue schématique d'un exemple d'un détecteur de fuites.
Figure 3 montre une vue schématique d'un premier exemple de dispositif de vision.
Figure 4 montre une vue schématique d'un exemple de ce qui peut être vu par l'utilisateur portant le dispositif de vision de la Figure 3 au cours d'une recherche de fuites.
Figure 5 montre un autre exemple de réalisation d'un dispositif de vision.
Figure 6 montre un autre exemple de ce qui peut être vu par l'utilisateur portant le dispositif de vision de la Figure 5.
Figure 7 montre un autre exemple de ce qui peut être vu par l'utilisateur portant le dispositif de vision de la Figure 5.
Figure 8 montre une vue schématique d'un utilisateur utilisant un module de détection de fuites pour le contrôle de l'étanchéité d'un objet à tester par aspersion de gaz traceur.
Figure 9 montre un exemple de ce qui peut être vu par l'utilisateur au cours d'un contrôle de l'étanchéité par aspersion de gaz traceur.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

On définit par « objet à tester », un objet ou une installation dont on souhaite contrôler l'étanchéité.

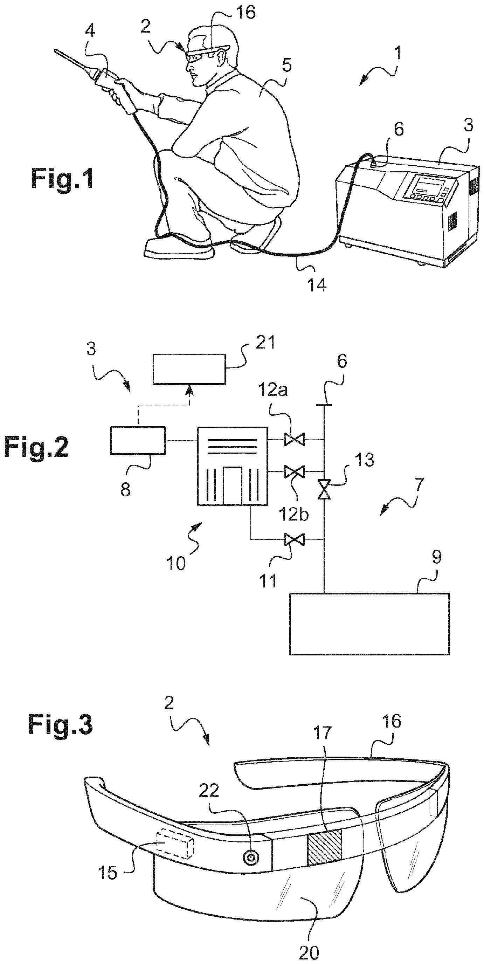

Figure 1 montre un exemple d'un module de détection de fuites 1 pour le contrôle de l'étanchéité d'un objet à tester par gaz traceur utilisé par un utilisateur 5.

Le module de détection de fuites 1 comporte un dispositif de vision 2, un détecteur de fuites 3 et une sonde 4.

Le détecteur de fuites 3 comporte par exemple et comme représenté sur la figure 2, une entrée de détection 6, un dispositif de pompage 7 et un détecteur de gaz 8.

Le dispositif de pompage 7 comporte par exemple au moins une pompe à vide primaire 9, telle qu'une pompe à membranes, et au moins une pompe à vide turbomoléculaire 10.

Le détecteur de gaz 8 est raccordé à la pompe à vide turbomoléculaire 10, par exemple à son aspiration. Le détecteur de gaz 8 comporte par exemple un spectromètre de masse. Le détecteur de gaz 8 permet notamment de déterminer une concentration en gaz traceur des gaz prélevés à l'entrée de détection 6.

Le refoulement de la pompe à vide turbomoléculaire 10 est raccordé à l'entrée de la pompe à vide primaire 9 via une première vanne d'isolation 11.

L'entrée de détection 6 du détecteur de fuites 3 est par exemple raccordée à un étage intermédiaire de la pompe à vide turbomoléculaire 10, via au moins une vanne de prélèvement 12a, 12b. Le dispositif de pompage 7 comporte par exemple au moins deux vannes de prélèvement 12a, 12b, chaque vanne 12a, 12b étant raccordée à un étage intermédiaire distinct de la pompe à vide turbomoléculaire 10 de manière à pouvoir adapter le flux de prélèvement au niveau du taux de fuites, la vanne de prélèvement 12a, 12b étant raccordée sur une dérivation d'une canalisation de la ligne de vide agencée entre l'entrée de détection 6 et une deuxième vanne d'isolation 13. La deuxième vanne d'isolation 13 est raccordée à la ligne de vide entre la première vanne d'isolation 11 et l'entrée de la pompe à vide primaire 9.

La sonde 4 présente un moyen de préhension lui permettant d'être manipulable par l'utilisateur 5.

Dans le premier exemple de réalisation illustré sur la Figure 1, la sonde 4 est une sonde de reniflage.

La sonde de reniflage est reliée à l'entrée de détection 6 du détecteur de fuites 3 par un tuyau flexible 14 de façon à aspirer les gaz environnants l'objet à tester rempli de gaz traceur. Une partie des gaz aspirés par le dispositif de pompage 7 est analysée par le détecteur de gaz 8 qui fournit une concentration en gaz traceur à une unité de contrôle 21 du détecteur 3. Le dépassement d'un seuil maximal de gaz traceur est révélateur d'une fuite. On utilise généralement l'hélium ou l'hydrogène comme gaz traceur car ces gaz traversent les petites fuites plus aisément que les autres gaz, du fait de la petite taille de leur molécule et de leur grande vitesse de déplacement.

Le dispositif de vision 2 est porté par la tête de l'utilisateur 5.

Comme on peut mieux le voir sur la Figure 3, le dispositif de vision 2 comporte une unité de traitement et d'affichage 15, un moyen de maintien 16 et une surface de visualisation 17 (Figure 3).

Le moyen de maintien 16 est configuré pour maintenir le dispositif de vision 2 sur la tête de l'utilisateur 5. Il comporte par exemple une monture destinée à reposer sur le nez de l'utilisateur et à prendre appui sur ses oreilles, telle qu'une monture de lunettes, ou comporte un arceau ajustable autour de la tête de l'utilisateur 5 ou un casque un support formant serre-tête.

La surface de visualisation 17 est fixée au moyen de maintien 16 pour pouvoir être placée dans le champ de vision de l'utilisateur 5.

Selon un exemple de réalisation, la surface de visualisation 17 comporte un écran configuré pour afficher des images dans une portion du champ de vision de l'utilisateur. Le dispositif de vision 2 peut en outre comporter une surface transparente protectrice 20, en verre ou en plastique, située entre les yeux de l'utilisateur 5 et l'écran, formant des lunettes.

L'unité de traitement et d'affichage 15 comporte un ou plusieurs contrôleurs ou processeurs notamment configurés pour communiquer avec un détecteur de fuites 3. Elle comporte par exemple des moyens de communication sans fils, tel que WIFI ou Bluetooth, configurés pour communiquer sans liaisons filaires avec des moyens de communication complémentaires de l'unité de contrôle 21 du détecteur de fuites 3. L'unité de traitement et d'affichage 15 peut donc ainsi accéder à des informations relatives à la détection de fuites. L'unité de traitement et d'affichage 15 est par exemple portée par le moyen de maintien 16, tel que par une branche du moyen de maintien 16.

L'unité de traitement et d'affichage 15 est en outre configurée pour afficher sur la surface de visualisation 17, une information 18 relative à la détection de fuites.

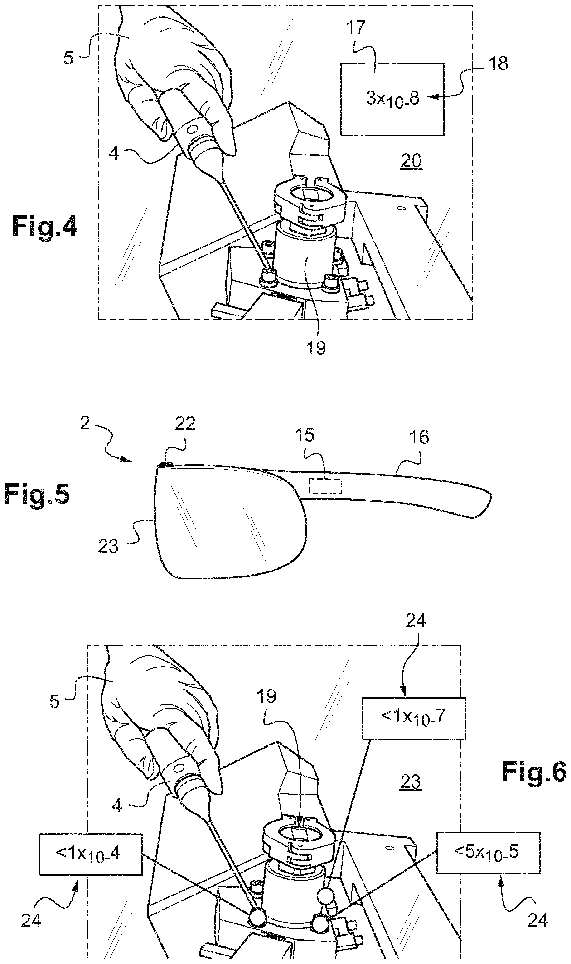

L'information 18 comprend au moins un signal représentatif de la concentration en gaz traceur mesurée par le détecteur de fuites 3 (Figure 4). La concentration en gaz traceur est donc affichée dans le champ de vision de l'utilisateur 5 peu importe où il regarde. L'information 18 affichée suit ainsi le regard de l'utilisateur 5 même si celui-ci détourne la tête de l'écran du détecteur 3.

Le signal peut être affiché de différentes façons selon les souhaits de l'utilisateur 5. Le signal est par exemple affiché sous la forme d'une valeur numérique (Figure 4), de bargraphes (barres graphiques d'intensité) ou de graphique.

L'information 18 affichée peut indiquer si le signal dépasse un seuil de concentration en gaz traceur maximal, par exemple à l'aide d'un code couleur. Le signal peut ainsi changer de couleur lorsque la concentration en gaz traceur franchit un seuil de détection. Il est par exemple affiché en vert lorsque la mesure est inférieure au seuil et en rouge lorsque la mesure franchit le seuil.

L'information 18 peut comporter un signal représentatif d'un état de fonctionnement du détecteur de fuites 3, tel qu'un état d'alerte ou de mesure en cours, un défaut, une maintenance à réaliser ou une recommandation d'utilisation. L'information 18 de l'état de fonctionnement du détecteur de fuites 3 permet par exemple à l'utilisateur ne pouvant pas visualiser directement le détecteur de fuites 3, de s'assurer qu'il est bien en train de faire une mesure pour conclure à l'absence de fuites en présence d'un signal de mesure faible ou nul.

L'information 18 peut également être affichée en complément sur un écran d'ordinateur ou de tablette ou peut être affiché directement sur l'objet à tester 19 via un projecteur.

Selon un exemple de réalisation, le dispositif de vision 2 comporte au moins une caméra frontale 22 configurée pour prendre des images dans le champ de vision de l'utilisateur 5. Il est ainsi possible de filmer la séquence d'opérations de mesure réalisées par l'utilisateur 5 sur l'objet à tester 19 ou de prendre une ou plusieurs photos du test réalisé pour par exemple l'associer avec un fichier des mesures de concentrations en gaz traceur. Un certificat d'étanchéité associé à l'objet à tester 19 peut ainsi être fourni à un client ou à un service de qualité, ce certificat prouvant d'une part, que les zones de test ont bien été testées par l'utilisateur 5 et d'autre part, que le niveau d'étanchéité est inférieur au seuil de rejet.

Nous allons maintenant décrire un exemple de fonctionnement du module de détection de fuites 1 et du procédé associé de contrôle de l'étanchéité d'un objet à tester 19 par gaz traceur.

L'objet à tester 19 est préalablement rempli en gaz traceur, par exemple pressurisé.

L'utilisateur 5 place le dispositif de vision 2 sur sa tête pour voir la surface de visualisation 17 dans son champ de vision.

L'utilisateur approche la sonde de reniflage 4 d'une zone de test.

La sonde 4 reliée au détecteur de fuites 3 aspire les gaz environnants l'objet à tester 19 dans la zone de test. Une partie des gaz ainsi prélevés, contenant éventuellement le gaz traceur révélateur d'une fuite, est alors analysée par l'analyseur de gaz 8 qui fournit une mesure de la concentration en gaz traceur à l'unité de contrôle 21 du détecteur de fuites 3. L'unité de contrôle 21 envoie cette information, traitée ou non, à l'unité de traitement et d'affichage 15. L'unité de traitement et d'affichage 15 affiche cette information 18 par exemple sous forme d'une valeur numérique sur la surface de visualisation 17 (Figure 4).

L'information 18 de la mesure de la concentration en gaz traceur est ainsi affichée en temps réel dans le champ de vision de l'utilisateur 5. L'utilisateur 5 a ainsi accès à la mesure sans avoir besoin de détourner le regard de la zone de test et sans avoir à tenir un écran déporté.

Les valeurs de concentration en gaz traceur mesurées et la séquence associée d'opérations de mesure réalisées par l'utilisateur 5 peuvent être enregistrées. La séquence d'opérations de mesure réalisée par l'utilisateur 5 sur l'objet à tester 19 peut être filmée par la caméra frontale 22 ou la caméra frontale 22 peut prendre une ou plusieurs photos du test réalisé sur l'objet à tester 19, notamment de la sonde 4 positionnée dans les zones de test. Ces résultats peuvent être associés à des numéros de série des objets à tester 19, ce qui est particulièrement utile en production. Cela permet de centraliser tous les résultats et permet à l'utilisateur de revenir ultérieurement sur un test réalisé.

La Figure 5 illustre un deuxième exemple de réalisation du dispositif de vision 2.

Ce deuxième mode de réalisation diffère du précédent par le fait que l'unité de traitement et d'affichage 15 est configurée pour afficher en réalité augmentée au moins une information 24 relative à la détection de fuites sur la surface de visualisation 23. La réalité augmentée permet à l'utilisateur de voir les informations 24 relatives à la détection de fuites, superposées au réel.

La surface de visualisation 23 est formée par une surface transparente permettant à l'utilisateur de voir à travers, telle qu'une surface de verre ou de plastique.

L'unité de traitement et d'affichage 15 peut en outre comporter un moyen de reconnaissance configuré pour reconnaitre au moins une zone de test d'un objet à tester 19 et pour afficher sur la surface de visualisation 23, une information 24 comportant un repère visuel de la au moins une zone de test (Figure 6).

Le repère visuel de la zone de test peut être un repérage d'une surface de l'objet à tester ou un parcours à suivre par la sonde 4.

Pour cela par exemple, on mémorise une représentation spatiale de l'objet à tester en 3D, par exemple sous forme d'un fichier, ainsi qu'au moins un repère de référence associé à l'objet à tester.

Le repère de référence permet d'associer l'objet à tester avec l'information à afficher sur la surface de visualisation 23. C'est par exemple un code-barres ou une photographie de l'objet à tester. Dans le cas d'un repère de référence de type code-barres, un même repère de référence est déposé sur l'objet à tester.

Le moyen de reconnaissance est par exemple configuré pour faire un traitement d'images notamment pour comparer les images prises par la caméra frontale 22 du dispositif de vision 2 portée par l'utilisateur 5 regardant l'objet à tester avec la représentation spatiale de l'objet à tester mémorisée. L'unité de traitement 15 recherche le repère de référence dans les images prises par la caméra frontale 22. Dans le cas d'un repère de référence de type code-barres, une fois le repère de référence reconnu, on sélectionne la représentation spatiale à faire correspondre avec les images. Dans le cas d'un repère de référence de type photo, on reconnait directement l'objet à tester dans les images prises par la caméra frontale 22 et on cherche à faire correspondre la représentation spatiale avec les images.

Cette étape de calibration permet que l'information affichée en réalité augmentée « suive » l'objet à tester vu à travers la surface de visualisation 23.

Selon un autre exemple, on peut prévoir que l'objet à tester 19 soit disposé par l'utilisateur 5 dans un repère spatial connu de sorte que le moyen de reconnaissance puisse identifier la zone de test de l'objet à tester dans la surface de visualisation 23 avec un traitement d'images allégé.

Trois zones de test prédéterminées de l'objet à tester 19 sont ainsi indiquées par un repère visuel respectif dans les informations 24 affichées en réalité augmentée sur l'exemple de la Figure 6.

En plus du repère visuel, l'information 24 peut comporter au moins un seuil de concentration en gaz traceur maximal associé à la zone de test. Le seuil peut être différent en fonction de la zone de test (Figure 6).

Le moyen de reconnaissance de l'unité de traitement et d'affichage 15 peut en outre être configuré pour reconnaitre un embout de la sonde 4 dans la surface de visualisation 23 et pour détecter lorsque l'embout de la sonde 4 est situé dans une zone de test de l'objet à tester 19. Comme précédemment, le moyen de reconnaissance peut identifier l'embout de la sonde 4 par traitement d'images. L'embout de la sonde 4 peut présenter un marqueur ou une couleur lui permettant d'être facilement identifiable par le moyen de reconnaissance de l'unité de traitement et d'affichage 15.

L'unité de traitement et d'affichage 15 peut par exemple être configurée pour inhiber une mesure tant que l'embout de la sonde 4 n'est pas détecté dans la zone de test ou peut informer l'utilisateur, par exemple par un signal sonore, lorsque la sonde 4 est détectée dans la zone de test. Cela peut permettre d'éviter les éventuelles conclusions erronées de tests d'étanchéité liées à de mauvais positionnements de la sonde 4.

L'information 24 affichée sur la surface de visualisation 23 peut indiquer les zones de test qui ont été testées par la sonde 4, par exemple à l'aide d'un code couleur et par exemple en laissant affiché en réalité augmentée un signal représentatif de la concentration en gaz traceur au niveau des zones de test qui ont été testées.

Il est ainsi possible pour l'utilisateur 5 de voir rapidement où sont les zones de test, quels sont les seuils maximum associés, quelles sont les zones qui ont déjà été testées et celles qui restent à tester ainsi qu'un état général du taux de fuite de l'objet à tester 19. On améliore la qualité du contrôle en réduisant les risques d'oublis de zones de test et on diminue la durée du test en évitant à l'utilisateur de perdre du temps à localiser les zones de test.

Les valeurs de concentration en gaz traceur mesurées peuvent être enregistrées.

La caméra frontale 22 peut en outre filmer la séquence d'opérations de mesure réalisée par l'utilisateur 5 sur l'objet à tester, montrant le circuit emprunté par la sonde 4 ou prendre une ou plusieurs photos de la sonde 4 positionnée dans des zones de test de l'objet à tester 19.

En fonctionnement, selon un exemple de mise en oeuvre :
L'objet à tester 19 est préalablement rempli en gaz traceur. L'utilisateur 5 place le dispositif de vision 2 sur sa tête pour voir devant lui à travers la surface de visualisation 23 positionnée dans son champ de vision.

L'unité de traitement et d'affichage 15 du dispositif de vision 2 indique à l'utilisateur 5 les zones de test de l'objet à tester 19 par l'affichage en réalité augmentée des repères visuels et des seuils de concentration en gaz traceur maximal associés sur la surface de visualisation 23 (Figure 6).

L'utilisateur approche la sonde 4 d'une zone de test.

L'unité de traitement et d'affichage 15 reconnait l'embout de la sonde 4 dans la surface de visualisation 23 et détecte lorsque l'embout de la sonde 4 a atteint une zone de test. Elle informe l'utilisateur 5 du positionnement correct de la sonde 4 par exemple par un signal sonore.

La sonde de reniflage 4 reliée au détecteur de fuites 3 aspire les gaz environnants l'objet à tester 19 dans la zone de test. Une partie des gaz ainsi prélevés, contenant éventuellement le gaz traceur révélateur d'une fuite, est alors analysée par l'analyseur de gaz 8 qui fournit une mesure de la concentration en gaz traceur à l'unité de contrôle 21 du détecteur de fuites 3. L'unité de contrôle 21 envoie cette information, traitée ou non, à l'unité de traitement et d'affichage 15.

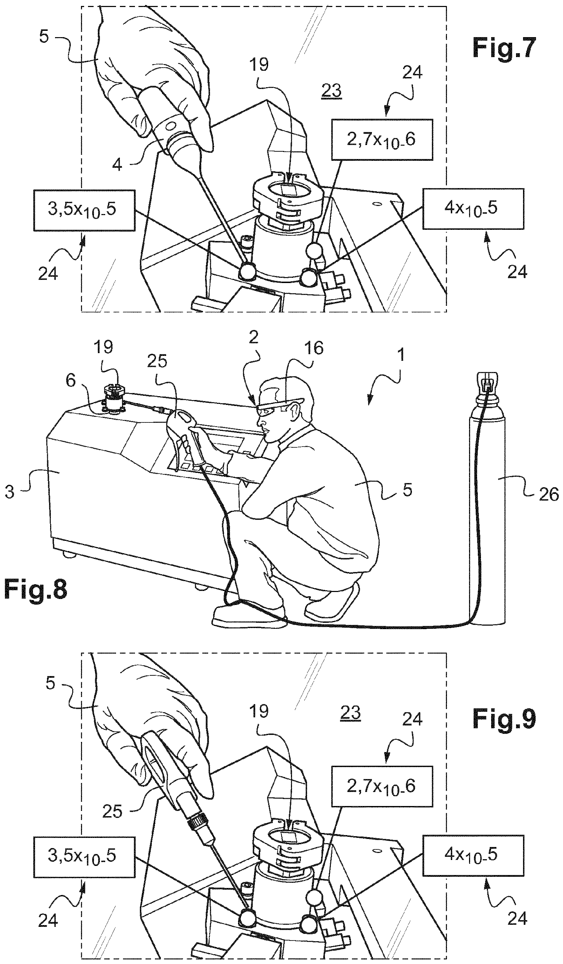

L'unité de traitement et d'affichage 15 affiche l'information 24 en réalité augmentée, par exemple sous forme d'une valeur numérique, sur la surface de visualisation 23 (Figure 7).

L'information 24 est ainsi affichée en temps réel dans le champ de vision de l'utilisateur 5. L'utilisateur 5 a ainsi accès à la mesure sans avoir besoin de détourner le regard de la zone de test et sans avoir à tenir un écran déporté.

Une fois que la mesure a été réalisée, par exemple après l'écoulement d'une durée prédéfinie dans la zone de test ou après activation d'un commutateur par l'utilisateur 5, on peut indiquer que la zone de test a été testée par la sonde 4. Pour cela, le signal représentatif de la concentration en gaz traceur peut être affiché en vert ou en rouge selon le résultat de la mesure.

L'utilisateur 5 peut alors passer à la zone de test suivante et ainsi de suite jusqu'à ce que toutes les zones de test soient testées, c'est-à-dire par exemple soient toutes associées à l'affichage en réalité augmentée d'un signal représentatif de la concentration en gaz traceur mesuré.

La Figure 8 montre un exemple de réalisation d'un contrôle de l'étanchéité d'un objet à tester par aspersion.

Dans cet exemple, la sonde 25 est une soufflette d'aspersion reliée à une source de gaz traceur 26 de façon à souffler du gaz traceur autour de l'objet à tester 19 raccordé à l'entrée de détection 6 du détecteur de fuites 3.

En fonctionnement, comme précédemment, l'utilisateur 5 place le dispositif de vision 2 sur sa tête pour voir devant lui à travers la surface de visualisation 17, 23 alors positionnée dans son champ de vision.

Selon un exemple de fonctionnement, le moyen de reconnaissance de l'unité de traitement et d'affichage 15 du dispositif de vision 2 reconnait l'objet à tester 19 préalablement mémorisé. L'unité de traitement 15 indique alors par exemple à l'utilisateur 5 les zones de test prédéterminées de l'objet à tester 19 par l'affichage en réalité augmentée des repères visuels et des seuils de concentration en gaz traceur maximal associés sur la surface de visualisation 17, 23.

L'utilisateur approche la sonde 25 d'une zone de test. Le moyen de reconnaissance de l'unité de traitement et d'affichage 15 peut reconnaitre l'embout de la sonde 25 et détecter lorsque l'embout de la sonde 25 est situé dans une zone de test de l'objet à tester 19. Elle informe l'utilisateur 5 du positionnement correct de la sonde 25 par exemple par un signal sonore.

L'utilisateur asperge du gaz traceur autour de l'objet à tester. Une partie des gaz prélevés par le dispositif de pompage 7 du détecteur de fuites 3, contenant éventuellement le gaz traceur révélateur d'une fuite, est alors analysée par l'analyseur de gaz 8 qui fournit une mesure de la concentration en gaz traceur à l'unité de contrôle 21 du détecteur de fuites 3. L'unité de contrôle 21 envoie cette information à l'unité de traitement et d'affichage 15.

L'unité de traitement et d'affichage 15 affiche cette information 18, 24 par exemple sous forme d'une valeur numérique, sur la surface de visualisation 17, 23.

L'information associée à la détection de fuites est ainsi affichée en temps réel dans le champ de vision de l'utilisateur 5 (Figure 9). L'utilisateur 5 a ainsi accès à la mesure sans avoir besoin de détourner le regard de la zone de test et sans avoir à tenir un écran déporté.

Une fois que la mesure a été réalisée, par exemple après l'écoulement d'une durée prédéfinie dans la zone de test, l'information 18, 24 indique que la zone de test a été testée par exemple en affichant le signal représentatif de la concentration en gaz traceur en réalité augmentée au niveau de la zone de test.

L'utilisateur 5 peut alors passer à la zone de test suivante et ainsi de suite jusqu'à ce que toutes les zones de test soient testées, c'est-à-dire soient toutes par exemple associées à l'affichage en réalité augmentée d'un signal représentatif de la concentration en gaz traceur mesuré.

## Revendications

1. Module de détection de fuites (1) pour le contrôle de l'étanchéité d'un objet à tester (19) par gaz traceur comportant un détecteur de fuites (3) et une sonde (4 ; 25) manipulable par l'utilisateur (5), comportant en outre un dispositif de vision (2) comprenant :
- une unité de traitement et d'affichage (15) configurée pour communiquer avec le détecteur de fuites (3),
**caractérisé en ce que** ledit dispositif de vision comprend de plus:
- un moyen de maintien (16) configuré pour maintenir le dispositif de vision (2) sur la tête d'un utilisateur (5), et
- une surface de visualisation (17 ; 23) fixée au moyen de maintien (16) pour être placée dans le champ de vision de l'utilisateur (5), l'unité de traitement et d'affichage (15) étant configurée pour afficher sur la surface de visualisation (17 ; 23), une information (18 ; 24) relative à la détection de fuites comprenant au moins un signal représentatif de la concentration en gaz traceur mesurée par le détecteur de fuites (3).

2. Module de détection de fuites (1) selon la revendication précédente, **caractérisé en ce que** le dispositif de vision (2) comporte au moins une caméra frontale (22) configurée pour prendre des images dans le champ de vision de l'utilisateur (5).

3. Module de détection de fuites (1) selon l'une des revendications précédentes, **caractérisé en ce que** la surface de visualisation (17) comporte un écran configuré pour afficher des images dans une portion du champ de vision de l'utilisateur (5).

4. Module de détection de fuites (1) selon l'une des revendications 1 ou 2, **caractérisé en ce que** la surface de visualisation (23) est formée par une surface transparente permettant à l'utilisateur (5) de voir à travers, l'unité de traitement et d'affichage (15) étant configurée pour afficher en réalité augmentée sur la surface de visualisation (23) au moins une information (24) relative à la détection de fuites.

5. Module de détection de fuites (1) selon l'une des revendications précédentes, **caractérisé en ce que** l'unité de traitement et d'affichage (15) comporte un moyen de reconnaissance configuré pour reconnaitre une zone de test de l'objet à tester (19) et pour afficher sur la surface de visualisation (23), un repère visuel de la au moins une zone de test.

6. Module de détection de fuites (1) selon la revendication précédente, **caractérisé en ce que** le moyen de reconnaissance est configuré pour reconnaitre un embout de la sonde (4 ; 25) dans la surface de visualisation (23) et pour détecter lorsque l'embout de la sonde (4 ; 25) est situé dans une zone de test de l'objet à tester (19).

7. Module de détection de fuites (1) selon l'une des revendications précédentes, **caractérisé en ce que** la sonde (4) est une sonde de reniflage reliée au détecteur de fuites (3).

8. Module de détection de fuites (1) selon l'une des revendications 1 à 6, **caractérisé en ce que** la sonde (25) est une soufflette d'aspersion destinée à être reliée à une source de gaz traceur (26).

9. Procédé de contrôle de l'étanchéité d'un objet à tester (19) par gaz traceur **caractérisé en ce qu'**un dispositif de vision (2) d'un module de détection de fuites (1) selon l'une des revendications précédentes affiche une information (18 ; 24) relative à la détection de fuites comprenant au moins un signal représentatif de la concentration en gaz traceur mesurée par le détecteur de fuites (3) sur une surface de visualisation (17 ; 23) placée dans le champ de vision de l'utilisateur (5) par un dispositif de vision (2) porté sur la tête d'un utilisateur (5).

10. Procédé de contrôle de l'étanchéité selon la revendication précédente, **caractérisé en ce que** le signal est affiché sous la forme d'une valeur numérique, de bargraphes ou de graphique.

11. Procédé de contrôle de l'étanchéité selon l'une des revendications 9 ou 10, **caractérisé en ce que** l'information (18 ; 24) affichée indique si le signal dépasse un seuil de concentration en gaz traceur maximal.

12. Procédé de contrôle de l'étanchéité (1) selon l'une des revendications 9 à 11, **caractérisé en ce que** l'information (18 ; 24) affichée comporte un signal représentatif d'un état de fonctionnement du détecteur de fuites (3), tel qu'un état d'alerte ou de mesure en cours, un défaut, une maintenance à réaliser ou une recommandation d'utilisation.

13. Procédé de contrôle de l'étanchéité selon l'une des revendications 9 à 12, **caractérisé en ce qu'**on reconnait au moins une zone de test prédéterminée de l'objet à tester (19) et on indique la zone de test en affichant en réalité augmentée, un repère visuel sur la surface de visualisation (23).

14. Procédé de contrôle de l'étanchéité selon la revendication précédente, **caractérisé en ce que** le repère visuel est accompagné de l'affichage d'au moins un seuil de concentration en gaz traceur maximal associé à la zone de test prédéterminée de l'objet à tester (19).

15. Procédé de contrôle de l'étanchéité selon l'une des revendications 13 ou 14, **caractérisé en ce qu'**on détecte lorsque l'embout de la sonde (4 ; 25) est situé dans une zone de test de l'objet à tester (19).

16. Procédé de contrôle de l'étanchéité selon la revendication précédente, **caractérisé en ce qu'**on indique les zones de test qui ont été testées par la sonde (4 ; 25).

17. Procédé de contrôle de l'étanchéité selon l'une des revendications 9 à 16, **caractérisé en ce qu'**on filme la séquence d'opérations de mesure réalisée par l'utilisateur (5) sur l'objet à tester ou on prend une ou plusieurs photos de la sonde (4 ; 25) positionnée dans des zones de test de l'objet à tester (19).

## Patentansprüche

1. Modul zur Erkennung von Lecks (1) zur Kontrolle der Dichtheit eines mit Spürgas zu überprüfenden Objekts (19), welches einen Leckdetektor (3) und eine durch den Benutzer (5) handhabbare Sonde (4; 25) aufweist und außerdem eine Sichtvorrichtung (2) aufweist, welche umfasst:
- eine Verarbeitungs- und Anzeigeeinheit (15), die dafür ausgelegt ist, mit dem Leckdetektor (3) zu kommunizieren,
**dadurch gekennzeichnet, dass** die Sichtvorrichtung außerdem umfasst:
- ein Haltemittel (16), das dafür ausgelegt ist, die Sichtvorrichtung (2) am Kopf eines Benutzers (5) zu halten, und
- eine Visualisierungsfläche (17; 23), die am Haltemittel (16) befestigt ist, um im Sichtfeld des Benutzers (5) angeordnet zu werden, wobei die Verarbeitungs- und Anzeigeeinheit (15) dafür ausgelegt ist, auf der Visualisierungsfläche (17; 23) eine Information (18; 24) in Bezug auf die Detektion von Lecks anzuzeigen, die wenigstens ein Signal umfasst, das für die von dem Leckdetektor (3) gemessene Konzentration von Spürgas repräsentativ ist.

2. Modul zur Erkennung von Lecks (1) nach dem vorhergehenden Anspruch, **dadurch gekennzeichnet, dass** die Sichtvorrichtung (2) wenigstens eine Frontkamera (22) aufweist, die dafür ausgelegt ist, Bilder im Sichtfeld des Benutzers (5) aufzunehmen.

3. Modul zur Erkennung von Lecks (1) nach einem der vorhergehenden Ansprüche, **dadurch gekennzeichnet, dass** die Visualisierungsfläche (17) einen Bildschirm aufweist, der dafür ausgelegt ist, in einem Abschnitt des Sichtfeldes des Benutzers (5) Bilder anzuzeigen.

4. Modul zur Erkennung von Lecks (1) nach einem der Ansprüche 1 oder 2, **dadurch gekennzeichnet, dass** die Visualisierungsfläche (23) von einer durchsichtigen Fläche gebildet wird, die dem Benutzer (5) ermöglicht hindurchzusehen, wobei die Verarbeitungs- und Anzeigeeinheit (15) dafür ausgelegt ist, auf der Visualisierungsfläche (23) in erweiterter Realität wenigstens eine Information (24) in Bezug auf die Detektion von Lecks anzuzeigen.

5. Modul zur Erkennung von Lecks (1) nach einem der vorhergehenden Ansprüche, **dadurch gekennzeichnet, dass** die Verarbeitungs- und Anzeigeeinheit (15) ein Erkennungsmittel aufweist, das dafür ausgelegt ist, einen Prüfbereich des zu überprüfenden Objekts (19) zu erkennen und auf der Visualisierungsfläche (23) eine visuelle Markierung des wenigstens einen Prüfbereichs anzuzeigen.

6. Modul zur Erkennung von Lecks (1) nach dem vorhergehenden Anspruch, **dadurch gekennzeichnet, dass** das Erkennungsmittel dafür ausgelegt ist, ein Endstück der Sonde (4; 25) in der Visualisierungsfläche (23) zu erkennen und zu detektieren, wenn sich das Endstück der Sonde (4; 25) in einem Prüfbereich des zu überprüfenden Objekts (19) befindet.

7. Modul zur Erkennung von Lecks (1) nach einem der vorhergehenden Ansprüche, **dadurch gekennzeichnet, dass** die Sonde (4) eine Schnüffelsonde ist, die dem Leckdetektor (3) verbunden ist.

8. Modul zur Erkennung von Lecks (1) nach einem der Ansprüche 1 bis 6, **dadurch gekennzeichnet, dass** die Sonde (25) eine Besprühungs-Blasvorrichtung ist, die dazu bestimmt ist, mit einer Sprühgasquelle (26) verbunden zu werden.

9. Verfahren zur Kontrolle der Dichtheit eines mit Spürgas zu überprüfenden Objekts (19), **dadurch gekennzeichnet, dass** eine Sichtvorrichtung (2) eines Moduls zur Erkennung von Lecks (1) nach einem der vorhergehenden Ansprüche eine Information (18; 24) in Bezug auf die Detektion von Lecks, die wenigstens ein Signal umfasst, das für die von dem Leckdetektor (3) gemessene Konzentration von Spürgas repräsentativ ist, auf einer Visualisierungsfläche (17; 23) anzeigt, die durch eine am Kopf eines Benutzers (5) getragene Sichtvorrichtung (2) im Sichtfeld des Benutzers (5) angeordnet wird.

10. Verfahren zur Kontrolle der Dichtheit nach dem vorhergehenden Anspruch, **dadurch gekennzeichnet, dass** das Signal in Form eines Zahlenwertes, von Bargraphen oder eines Diagramms angezeigt wird.

11. Verfahren zur Kontrolle der Dichtheit nach einem der Ansprüche 9 oder 10, **dadurch gekennzeichnet, dass** die angezeigte Information (18; 24) angibt, ob das Signal einen maximalen Schwellenwert der Konzentration von Spürgas überschreitet.

12. Verfahren zur Kontrolle der Dichtheit (1) nach einem der Ansprüche 9 bis 11, **dadurch gekennzeichnet, dass** die angezeigte Information (18; 24) ein Signal aufweist, das für einen Betriebszustand des Leckdetektors (3), wie etwa einen Alarmzustand oder eine im Gang befindlichen Messung, eine Störung, eine durchzuführende Wartung oder eine Benutzungsempfehlung repräsentativ ist.

13. Verfahren zur Kontrolle der Dichtheit nach einem der Ansprüche 9 bis 12, **dadurch gekennzeichnet, dass** wenigstens ein vorbestimmter Prüfbereich des zu überprüfenden Objekts (19) erkannt wird und der Prüfbereich angegeben wird, indem auf der Visualisierungsfläche (23) in erweiterter Realität eine visuelle Markierung angezeigt wird.

14. Verfahren zur Kontrolle der Dichtheit nach dem vorhergehenden Anspruch, **dadurch gekennzeichnet, dass** die visuelle Markierung von der Anzeige wenigstens eines maximalen Schwellenwertes der Konzentration von Spürgas begleitet wird, der dem vorbestimmten Prüfbereich des zu überprüfenden Objekts (19) zugeordnet ist.

15. Verfahren zur Kontrolle der Dichtheit nach einem der Ansprüche 13 oder 14, **dadurch gekennzeichnet, dass** detektiert wird, wenn sich das Endstück der Sonde (4; 25) in einem Prüfbereich des zu überprüfenden Objekts (19) befindet.

16. Verfahren zur Kontrolle der Dichtheit nach dem vorhergehenden Anspruch, **dadurch gekennzeichnet, dass** die Prüfbereiche angegeben werden, welche von der Sonde (4; 25) überprüft worden sind.

17. Verfahren zur Kontrolle der Dichtheit nach einem der Ansprüche 9 bis 16, **dadurch gekennzeichnet, dass** die Folge von Messvorgängen, die von dem Benutzer (5) an dem zu überprüfenden Objekt ausgeführt wird, gefilmt wird oder ein oder mehrere Fotos der in Prüfbereichen des zu überprüfenden Objekts (19) positionierten Sonde (4; 25) aufgenommen werden.

## Claims

1. Leak detection module (1) for checking the seal-tightness of an object to be tested (19) by tracer gas comprising a leak detector (3) and a probe (4; 25) that can be manipulated by the user (5), further comprising a vision device (2) comprising:
- a processing and display unit (15) configured to communicate with the leak detector (3),
**characterized in that** said vision device also comprises:
- a securing means (16) configured to secure the vision device (2) on the head of a user (5), and
- a viewing surface (17; 23) fixed to the securing means (16) to be placed in the field of view of the user (5), the processing and display unit (15) being configured to display, on the viewing surface (17; 23), information (18; 24) relating to the detection of leaks comprising at least one signal representative of the concentration of tracer gas measured by the leak detector (3).

2. Leak detection module (1) according to the preceding claim, **characterized in that** the vision device (2) comprises at least one front-mounted camera (22) configured to take images in the field of view of the user (5).

3. Leak detection module (1) according to one of the preceding claims, **characterized in that** the viewing surface (17) comprises a screen configured to display images in a portion of the field of view of the user (5) .

4. Leak detection module (1) according to one of Claims 1 and 2, **characterized in that** the viewing surface (23) is formed by a transparent surface allowing the user (5) to see through, the processing and display unit (15) being configured to display, in augmented reality on the viewing surface (23), at least one item of information (24) relating to the detection of leaks.

5. Leak detection module (1) according to one of the preceding claims, **characterized in that** the processing and display unit (15) comprises a recognition means configured to recognize a test zone of the object to be tested (19) and to display, on the viewing surface (23), a visual marker of the at least one test zone.

6. Leak detection module (1) according to the preceding claim, **characterized in that** the recognition means is configured to recognize an end-fitting of the probe (4; 25) in the viewing surface (23) and to detect when the end-fitting of the probe (4; 25) is situated in a test zone of the object to be tested (19).

7. Leak detection module (1) according to one of the preceding claims, **characterized in that** the probe (4) is a sniffer probe linked to the leak detector (3).

8. Leak detection module (1) according to one of Claims 1 to 6, **characterized in that** the probe (25) is a spray gun intended to be linked to a tracer gas source (26).

9. Method for checking the seal-tightness of an object to be tested (19) by tracer gas, **characterized in that** a vision device (2) of a leak detection module (1) according to one of the preceding claims, displays information (18; 24) relating to the detection of leaks comprising at least one signal representative of the concentration of tracer gas measured by the leak detector (3) on a viewing surface (17; 23) placed in the field of view of the user (5) by a vision device (2) worn on the head of a user (5).

10. Method for checking seal-tightness according to the preceding claim, **characterized in that** the signal is displayed in the form of a numeric value, of bar graphs or in the form of a graph.

11. Method for checking seal-tightness according to one of Claims 9 and 10, **characterized in that** the information (18; 24) displayed indicates whether the signal exceeds a maximum tracer gas concentration threshold.

12. Method for checking seal-tightness (1) according to one of Claims 9 to 11, **characterized in that** the information (18; 24) displayed comprises a signal representative of a state of operation of the leak detector (3) such as a state of alert or of measurement in progress, a fault, maintenance to be performed or a usage recommendation.

13. Method for checking seal-tightness according to one of Claims 9 to 12, **characterized in that** at least one predetermined test zone of the object to be tested (19) is recognized and the test zone is indicated by displaying, in augmented reality, a visual marker on the viewing surface (23).

14. Method for checking seal-tightness according to the preceding claim, **characterized in that** the visual marker is accompanied by the display of at least one maximum tracer gas concentration threshold associated with the predetermined test zone of the object to be tested (19).

15. Method for checking seal-tightness according to one of Claims 13 and 14, **characterized in that** there is a detection of when the end-fitting of the probe (4; 25) is situated in a test zone of the object to be tested (19).

16. Method for checking seal-tightness according to the preceding claim, **characterized in that** the test zones which have been tested by the probe (4; 25) are indicated.

17. Method for checking seal-tightness according to one of Claims 9 to 16, **characterized in that** the sequence of measurement operations performed by the user (5) on the object to be tested is filmed or one or more photos are taken of the probe (4; 25) positioned in test zones of the object to be tested (19).
